# EUROPEAN PATENT SPECIFICATION

(11) **EP 1 847 353 B1**
(45) Date of publication and mention of the grant of the patent: **18.05.2011**
(21) Application number: 06713227.4
(22) Date of filing: 07.02.2006
(51) Int. Cl.: B23Q 3/157

(54) **AUTOMATIC TOOL CHANGER, TOOL CHANGING METHOD THEREFOR, AND MACHINE TOOL USING THE TOOL CHANGER**
AUTOMATISCHE WERKZEUGWECHSLER, WERKZEUGWECHSLERVERFAHREN DAFÜR UND DEN WERKZEUGWECHSLER VERWENDENDES MASCHINENWERKZEUG
CHANGEUR D'OUTIL AUTOMATIQUE, PROCEDE DE CHANGEMENT D'OUTIL ET MACHINE-OUTIL UTILISANT LE CHANGEUR D'OUTIL

(30) Priority: 07.02.2005 JP 2005031108
(43) Date of publication of application: 24.10.2007
(73) Proprietor: Nano Corporation, Kanazawa-ku, Yokohama Kanagawa (JP)
(72) Inventor: HAYASHI, Akira, Tokyo 1440042 (JP); MURANAKA, Katsuyuki, Tokyo 1440042 (JP); KITAHARA, Tokio, Fujisawa-shi, Kanagawa (JP); MITSUI, Kimiyuki, Tamatsuna, Kamakura-shi, Kanagawa 2470 (JP)
(74) Representative: Thun, Clemens
(86) International application number: PCT/JP2006/302084
(87) International publication number: WO 2006/082982

(56) References cited:
- EP-A- 1 498 219
- FR-A- 1 410 534
- GB-A- 1 408 131
- JP-A- 11 504 575
- JP-A- 58 192 731
- JP-B1- 48 004 991
- JP-U- 60 084 226
- US-A- 4 745 674

## Description

### Technical Field

The present invention relates to an automatic tool exchange apparatus for automatic exchange of a tool in micro-machine tools such as micro-lathe, micro-milling machine, etc., a tool exchange method therefor, and a machine tool making use of the same.

### Background Art

Conventionally, various automatic tool exchange apparatuses have been proposed see for example patent document EP-A-1 498 219 in which a tool in machine tools such as lathe, milling machine, etc. is automatically exchanged without hands. For example, a construction is proposed, in which at the time of exchange of a tool, a stocker accommodating therein a plurality of tool pallets with a plurality of tools detachably held is moved outside a machine tool to position a tool pallet relative to the machine tool, the tool pallet thus positioned is conveyed between the stocker and the machine tool, and a robot hand moves among a tool shaft of the machine tool, the tool pallet, and a reserve tool pallet to automatically exchange a tool (see, for example, Patent Document 1: JP-A-2001-198762 ((0010) to (0011) and Figs. 1 and 2).
Also, a construction of a machine tool provided with a plurality of tool magazines for exchange of a tool between them and a main spindle is proposed, in which a tool storage magazine for storage of a multiplicity of tool holders is provided separately from the tool magazines, when one of the tool magazines is present in a tool exchange position, in which a tool is exchanged between main spindle and the tool storage magazine, the tool magazine is moved so as to be positioned in a tool ready position, in which another one of the tool magazines exchanges a tool between it and the tool storage magazine, a holder conveyance device, which conveys a tool holder between the tool storage magazine and a tool magazine in the tool ready position, exchanges a tool holder between the tool storage magazine and a tool magazine, and a manual exchange work is eliminated and a tool required for a subsequent process is automatically made ready keeping pace during working while using a tool magazine in the tool exchange position to successively exchange a main spindle tool (see, for example, Patent Document 2: JP-A-2002-178236 ((0004) and Fig. 1).

### Disclosure of the Invention

### Problems that the Invention is to Solve

With the construction in Patent Document 1, since a robot hand, which grasps a tool, moves among the tool shaft of the machine tool, the tool pallet, and the reserve tool pallet to exchange a tool, it is necessary, to move the tool, to cause the robot hand to grasp a tool to move the same between the tool pallet and the reserve tool pallet. Accordingly, there is caused a problem that a robot hand mechanism and a control mechanism for control of an operation thereof are needed and the construction is complicate.
On the other hand, with the construction in Patent Document 2, since the holder conveyance device, which conveys a tool holder, is moved between the tool storage magazine and a tool magazine to exchange the tool holder, in order to move a tool, it is required that the holder conveyance device mounting thereon a tool holder is moved between the tool storage magazine and a tool magazine to exchange the tool holder. Accordingly, there is caused a problem that a holder conveyance device mechanism and a control mechanism for control of an operation thereof are needed and the construction is also complicate.

Hereupon, it is an object of the invention to dissolve such problems and to provide an automatic tool exchange apparatus, which dispenses with a robot hand for grasping and moving a tool, and a mechanism for mechanically moving a tool, such as a holder conveyance device for conveyance of a tool, and which is simple in construction and enables surely and automatically exchanging a tool in a short time, a tool exchange method therefor, and a machine tool making use of the automatic tool exchange apparatus.

### Means for Solving the Problems

The invention according to claim 1 provides an automatic tool exchange apparatus comprising a tool exchange unit and a main spindle part, wherein the tool exchange unit comprises a tool magazine, which rotates about a rotating shaft and includes a plurality of tool storage parts, means for moving the tool magazine toward the rotating shaft, and an air supply source, which supplies an air flow to move a tool to the main spindle part, and the main spindle part comprises a motor, which rotates the tool, a tool clamp, which holds the tool, and an air supply source, which supplies an air flow to move the tool to the tool exchange unit, and a tool storage part, characterised in that the tool is press fitted into a collet formed at an outer periphery thereof with a recess, into which a steel ball can be fitted, and the collet is accommodated in the tool storage part with the steel ball therebetween, wherein the tool storage part is provided with a space, which the steel ball enters and leaves, and the steel ball moves in the space to release joining of the collet and the tool storage part.
The invention according to claim 2 adds to the automatic tool exchange apparatus according to claim 1 a feature that there is provided positioning means that makes a center position of the tool storage part and a center position of the shaft agree with each other.
The invention according to claim 3 provides a tool exchange method for an automatic tool exchange apparatus, in which a tool exchange unit and a main spindle part are opposingly arranged, the tool exchange method characterized in that a tool is moved by an air flow between a tool magazine, which is provided on the tool exchange unit to store a tool, and a tool clamp, which is provided on the main spindle part to hold the tool, and thus the tool is exchanged.
The invention according to claim 4 provides a machine tool comprising a tool exchange apparatus according to claim 1, further comprising a work holding unit wherein the work holding unit comprises the work holder mounted on a table, which is movable in two directions perpendicular to each other on a horizontal plane.

### Effect of the Invention

The invention is effective in making the apparatus small in size since a mechanism, in which a tool is rotated by an arm or the like to be moved at the time of tool exchange, is dispensed with. Also, the apparatus is simple in construction and enables surely and automatically exchanging a tool in a short time without hands.
Also, since the automatic tool exchange apparatus can be constructed to be small in size, it is possible to provide a machine tool such as lathe, milling machine, etc., into which an automatic tool exchange apparatus is assembled integrally, thus enabling constructing a micro-machining center suited to precision machining.

### Brief Description of the Drawings

[Fig. 1] Fig. 1 is a side cross sectional view showing a machine tool according to an embodiment of the invention.
[Fig. 2] Fig. 2 is a perspective view showing the machine tool.
[Fig. 3] Fig. 3 is a perspective view showing a tool exchange unit of an automatic tool exchange apparatus in the machine tool.
[Fig. 4] Fig. 4 is a side cross sectional view showing the tool exchange unit of the automatic tool exchange apparatus in the machine tool.
[Fig. 5] Fig. 5 is a side cross sectional view showing a main spindle part in the automatic tool exchange apparatus.
[Fig. 6] Fig. 6 is an enlarged view showing an essential part in Fig. 5.
[Fig. 7] Fig. 7 is a flowchart illustrating a process, in which a tool mounted to the main spindle part in the automatic tool exchange apparatus according to the embodiment is returned to the tool exchange unit.
[Fig. 8] Fig. 8 is a flowchart illustrating a process, in which a tool is supplied to the main spindle part in the automatic tool exchange apparatus according to the embodiment.

### Description of Reference Numerals and Signs

10: automatic tool exchange apparatus
11: tool exchange unit
12: rotating shaft
13: tool magazine
14: tool handler
15: holder
16: tool
17: tool storage part
18: motor
19: stopper
21: main spindle part
22: tool clamp
23: spindle housing
24: motor
25: main spindle
26: encoder
27: Y slider
31: collet
32: recess
33: piston
41: air supply source
42: tool storage part
43: spring
44: steel ball
46: space
47: air flow passage

### Best Mode for Carrying Out the Invention

An automatic tool exchange apparatus according to a first embodiment of the invention comprises a tool exchange unit and a main spindle part, the tool exchange unit comprises a tool magazine, which rotates about a rotating shaft and includes a plurality of tool storage parts, means, which moves the tool magazine toward the rotating shaft, and an air supply source, which supplies an air flow to move a tool to the main spindle part, and the main spindle part comprises a motor, which rotates the tool, a tool clamp, which holds the tool, and an air supply source, which supplies an air flow to move the tool to the tool exchange unit. According to the embodiment, a moving mechanism, such as arm or the like, for moving a tool is dispensed with, and the construction is simple in construction and enables surely and automatically exchanging a tool in a short time without hands.
In the automatic tool exchange apparatus according to the first embodiment, the tool is press fitted into a collet formed at an outer periphery thereof with a recess, into which a steel ball can be fitted, and the collet is accommodated in the tool storage part with the steel ball therebetween, so that it is possible to handle the tool and the collet in an integral construction. Accordingly, storage in the tool storage part is enabled in a detachable manner and movement by an air flow is enabled surely.
In the automatic tool exchange apparatus according to the second embodiment, the tool storage part is moved to move the steel ball in the space and it is possible to simply release joining of the collet and the tool storage part.
According to a second embodiment of the invention, in the automatic tool exchange apparatus according to the first embodiment, there is provided with positioning means that makes a center position of the tool storage part and a center position of the shaft agree with each other and it is possible to surely make positioning in exchanging tools.
A tool exchange method for an automatic tool exchange apparatus, according to a third embodiment of the invention, is one, in which a tool exchange unit and a main spindle part are opposingly arranged, the tool exchange method characterized in that a tool is moved by an air flow between a tool magazine, which is provided on the tool exchange unit to store a tool, and a tool clamp, which is provided on the main spindle part to hold the tool, and thus the tool is exchanged, so that a moving mechanism for moving a tool is dispensed with and the construction is simple in construction and enables surely and automatically exchanging a tool in a short time without hands.
A machine tool according to a fourth embodiment of the invention comprises a machine tool according to claim 4 so that miniaturization is enabled, in which an automatic tool exchange apparatus is integrally assembled into machine tools such as lathe, milling machine, etc. and a micro-machine tool can be realized to surely and automatically exchange a tool in a short time.

### Embodiment

An embodiment of a machine tool provided with an automatic tool exchange apparatus according to the invention will be described below with reference to the drawings.

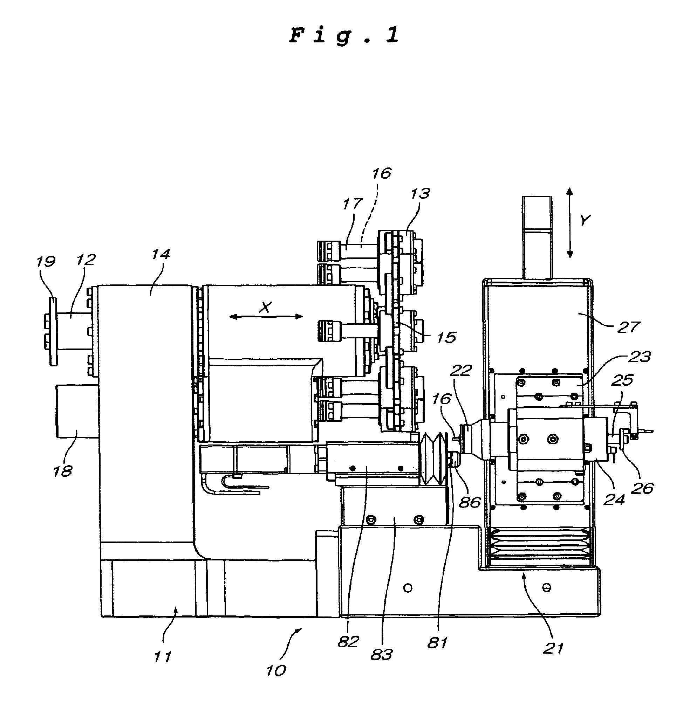

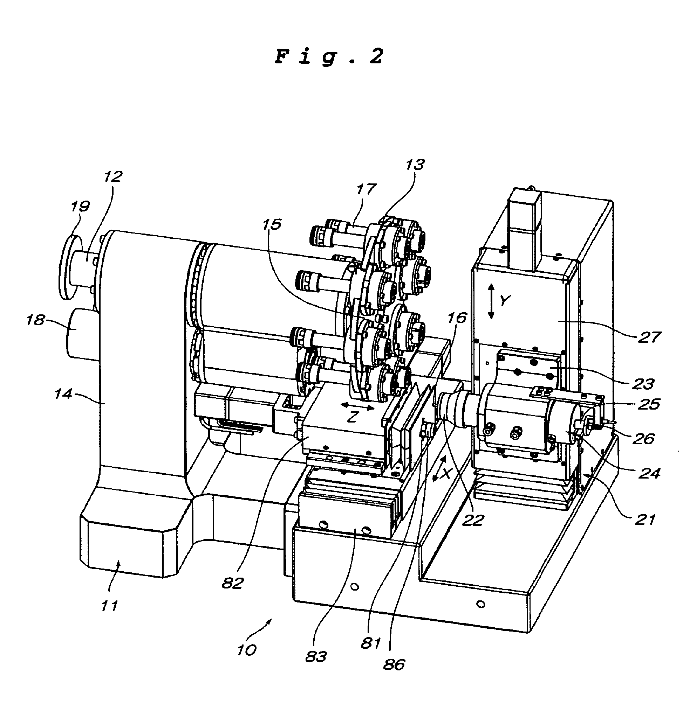

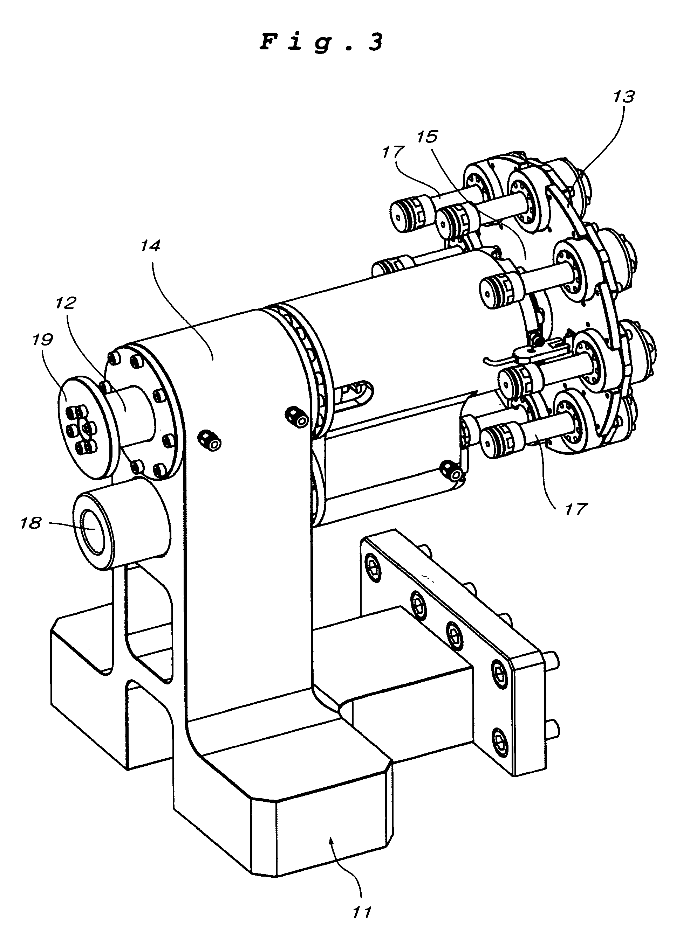

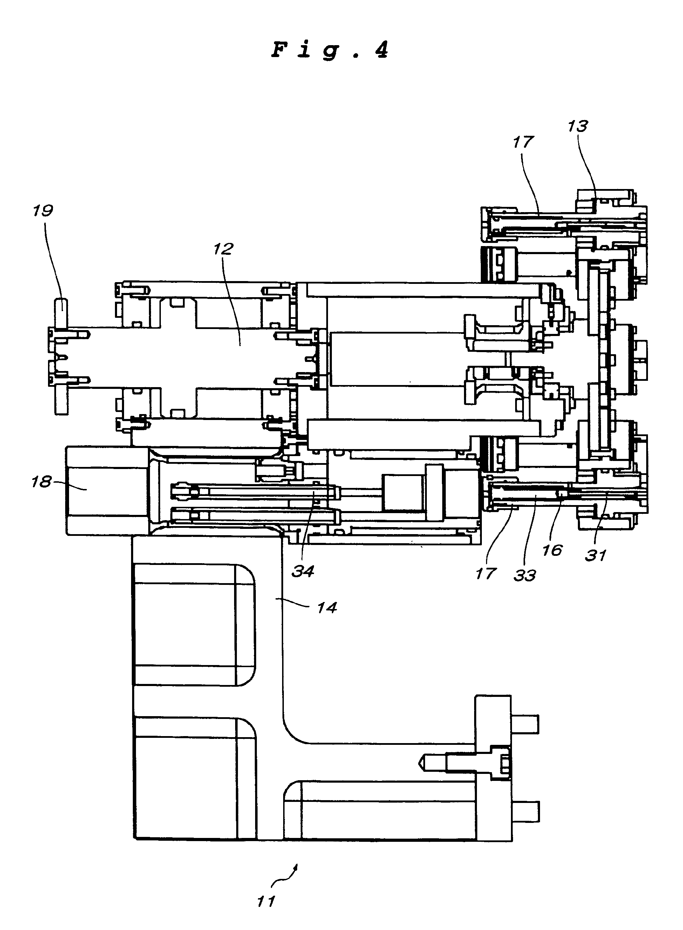

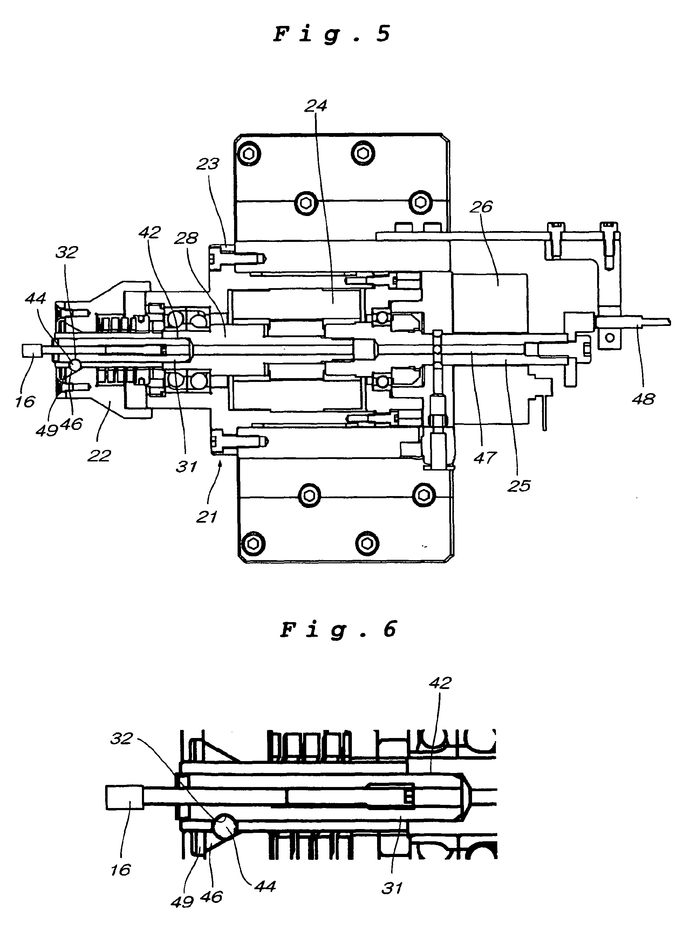

Fig. 1 is a side cross sectional view showing a machine tool according to the embodiment, Fig. 2 is a perspective view showing the machine tool, Fig. 3 is a perspective view showing a tool exchange unit of an automatic tool exchange apparatus in the machine tool, Fig. 4 is a side cross sectional view showing the tool exchange unit, Fig. 5 is a side cross sectional view showing a main spindle part in the automatic tool exchange apparatus, and Fig. 6 is an enlarged view showing an essential part in Fig. 5.
Fig. 1 shows a state of an electric source being made OFF before a tool is automatically exchanged. An automatic tool exchange apparatus 10 comprises a tool exchange unit 11 and a main spindle part 21. The tool exchange unit 11 and the main spindle part 21 are opposingly arranged on a common base. The tool exchange unit 11 includes a direct-acting shaft 12, a tool magazine 13, and a tool handler 14. The direct-acting shaft 12 is slid in a horizontal direction (Z direction) by compressed air. The direct-acting shaft 12 is slid whereby the tool magazine 13 is moved in the Z direction. Also, the tool magazine 13 is supported on a cross roller ring to rotate about the direct-acting shaft 12 connected to a motor (stepping motor) 18. The tool magazine 13 comprises a plurality of tool storage parts 17, which accommodate tools 16, in a disk-shaped holder 15, and the tool magazine 13 rotates about the direct-acting shaft 12 to enable arrangement in a position being opposable to a tool clamp 22 of the main spindle part 21. Arranged in each of the tool storage parts 17 are a tool 16 and a collet 31, which supports a tip end of the tool 16. Also, the tool storage parts 17 comprise a piston 33, which pushes a tool 16 through a collet 31. The pistons 33 function as a detent for the collet 31.
The tool handler 14 comprises an air supply source, which is moved together with the tool magazine 13 in the Z direction upon sliding movements of the direct-acting shaft 12 and attaches or detaches a tool 16 between the tool storage parts 17 and the tool clamp 22 of the main spindle part 21. The air supplied from the air supply source causes the tool handler 14 to move in a direction, in which the tool clamp 22 is pushed or separated.
In addition, provided at a tip end of the main spindle part 21 is a stopper 19, which limits movement of the tool magazine 13.

The main spindle part 21 comprises a main spindle driving motor 24 in a spindle housing 23. main spindle 25 is connected to one end of the main spindle driving motor 24 and provided with an encoder 26. Also, the tool clamp 22 is provided on the other end of the main spindle driving motor 24. The spindle housing 23 is mounted to a Y slider 27, which is movable in a vertical direction (Y direction). In addition, provided on the spindle housing 23 is a return to origin proximity sensor 48, which detects a position of the main spindle 25.
Registration of a center position of the tool clamp 22 and a center position of that collet 31, into which a tool 16 in the tool storage parts 17 is press fitted, is performed by providing an encoder, which detects a rotation of the tool magazine 13, on the direct-acting shaft 12, or by pulse control of the stepping motor.
A work holding unit comprises a work holder 81, a Z table 82, on which the work holder 81 is mounted, and an X table 83. The work holder 81 is mounted on the Z table 82, which is movable in the Z direction, and can be moved in the Z direction by movement of the Z table 82. The Z table 82 is mounted on the X table 83, which is movable in the X direction, and the work holder 81 can also be moved in the X direction by movement of the X table 83.
On the other hand, the spindle housing 23 of the main spindle part 21 is mounted on the Y slider 27, which is movable in the Y direction, and can be moved in the Y direction by movement of the Y slider 27. The Y slider 27 is fixed to a base. The Z table 82, the X table 83, and the Y slider 27 are driven by motors.

Subsequently, the main spindle part 21 in the automatic tool exchange apparatus will be described with reference to Fig. 5. The main spindle driving motor 24 connects the main spindle 25 to one end thereof and connects a shaft 28 to the other end thereof. The main spindle 25 and the shaft 28 have axes in a horizontal direction and are arranged in parallel to the direct-acting shaft 12 of the tool exchange unit 11. A tool storage part 42 is provided on a tip end side of the shaft 28 and the tool clamp 22 is provided in the vicinity of a tip end of the tool storage part 42. A space 46, which permits a steel ball 44 to enter or leave, is formed in the tool clamp 22 to be directed inward from a tip end side thereof.
Since a recess 32 is formed in that collet 31, into which a tool 16 is press fitted, the tool clamp 22 pushes the steel ball 44 owing to a force of a spring 43 and the steel ball 44 is fitted into the recess 32 to fix a tool 16 when the collet 31 is accommodated in the tool storage part 42. When the tool clamp 22 is moved toward a rear end, the steel ball 44 is made free to be readily disengaged from the recess 32 of the collet 31, so that locking between the collet 31 and the tool storage part 42 is released.
An interior of the main spindle 25 is hollow and the hollow portion defines an air flow passage 47. Provided on a rear end side of the main spindle 25 is an air supply source communicated to the air flow passage 47. The air supplied from the air supply source passes through the air flow passage 47 to cause the collet 31, which is accommodated in the tool storage part 42, to act on a tip end side.

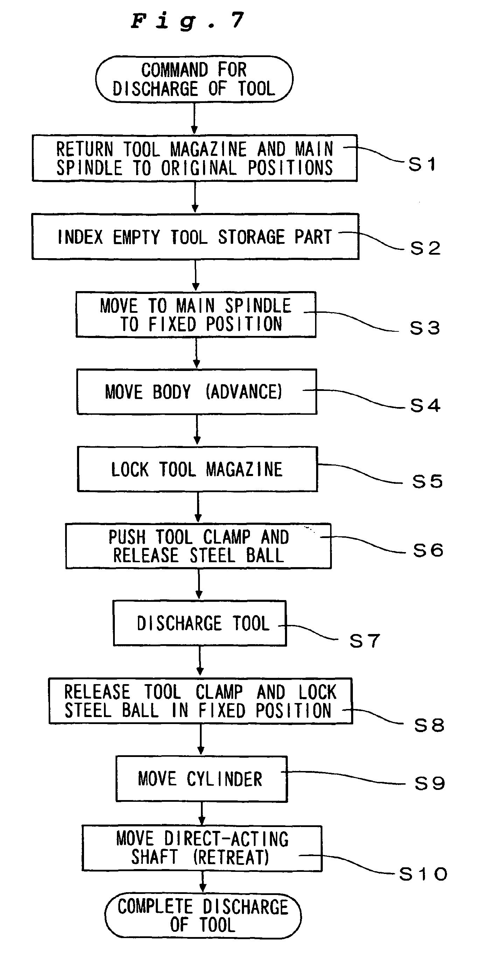

Subsequently, an explanation will be given to a tool exchange motion of the automatic tool exchange apparatus described in Figs. 1 to 6.
First, the process, in which a tool 16 mounted in the main spindle part 21 is returned to the tool exchange unit 11, will be described with reference to Fig. 7. When the electric source is made ON and instructions to the effect that the tool 16 mounted in the main spindle part 21 should be discharged are issued, the tool magazine 13 of the tool exchange unit 11 is returned to an origin position and the return to origin proximity sensor 48 is used to regulate an origin position of the main spindle 25 (STEP 1). Return to the origin position is performed in order to make a center position of the tool storage parts 17 of the tool exchange unit 11 agree with a center position of the tool clamp 22 of the main spindle part 21. Return of the tool magazine 13 to the origin position is performed by rotating the tool magazine 13 around the direct-acting shaft 12 by means of pulse control, which is beforehand set corresponding to the origin position. At this time, return of the tool magazine 13 to the origin position is once performed at the time of power-on and can be omitted thereafter.
Subsequently, a position of the tool storage part 17, which is empty, is indexed (STEP 2) in order to receive a tool 16 mounted on the main spindle part 21, and a center position of the empty tool storage part 17 as indexed is moved to a fixed position, which agrees with a center position of the tool clamp 22 of the main spindle part 21 (STEP 3). Subsequently, the tool magazine 13 is moved toward the main spindle part 21 along the direct-acting shaft 12 (STEP 4). This movement is made by supplying of a compressed air until the movement is terminated by the stopper 19, and after termination of the movement the tool magazine 13 is fixed in the position determined in STEP 3 by pushing out a cylinder connected to the compressed air source (STEP 5). In addition, the tool magazine 13 may be fixed after the termination of STEP 3 and thereafter STEP 4 is exercised.
When STEP 3, STEP 4, and STEP 5 are terminated, tip ends of the tool storage parts 17 are put in a state of aligning coaxially with a position opposed to the tool clamp 22.
Subsequently, an air flow is applied to the air supply source, which pushes the tool storage parts 17 shown in Fig. 4, to push the tool clamp 22. Since a force at this time is larger than a force of the spring 43, which biases the tool clamp 22, the tool clamp 22 is pushed rearward. The tool clamp 22 is pushed rearward whereby locking of the steel ball 44 is released (STEP 6). Here, when an air flow is applied to the air flow passage 47, the collet 31 is pneumatically pushed forward by virtue of absence of the steel ball 44, by which it is locked, and the collet 31 is received inside the tool storage parts 17 (STEP 7). Thereafter, an air flow in the air flow passage 47 and an air flow to the tool storage parts 17 are released whereby the tool clamp 22 is returned to its original position by the force of the spring 43 and the steel ball 44 is again locked by the tool clamp 22 (STEP 8). Thereafter, discharge of a tool is completed by returning the cylinder and the direct-acting shaft 12 to former positions by the air flow (STEP 9, STEP 10). It does not matter whether STEP 9 and STEP 10 are reversed in the order.

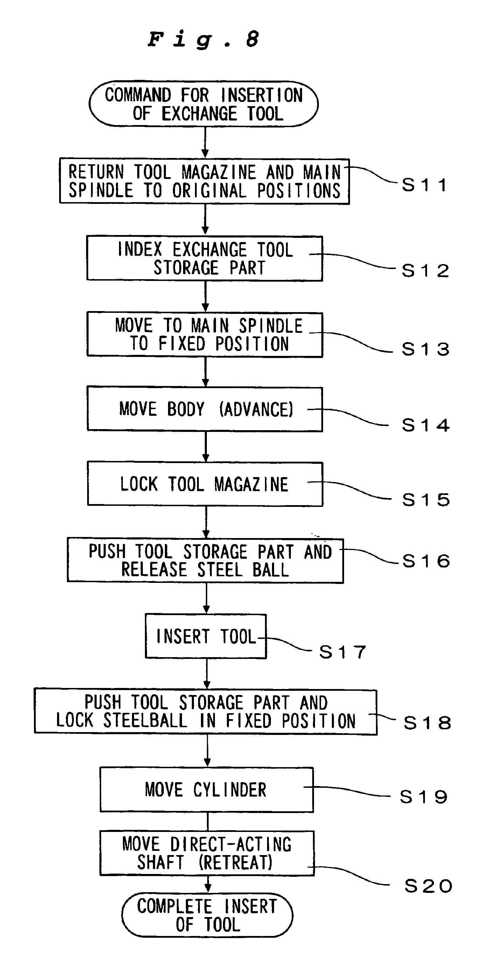

Subsequently, the process, in which a fresh tool 16 is supplied to the main spindle part 21 from the tool exchange unit 11, will be described with reference to Fig. 8. When the electric source is made ON and instructions to the effect that a fresh tool 16 for exchange should be supplied to the main spindle part 21 are issued, the tool magazine 13 of the tool exchange unit 11 is returned to an origin position and the return to origin proximity sensor 48 is used to regulate an origin position of the main spindle 25 (STEP 11). In addition, in the case where a motion returned to an origin position has already been terminated, such as after discharge of a tool 16 from the main spindle part 21 or the like, STEP 1 may be omitted. Return of the tool magazine 13 to the origin position is performed in the same operation as that in STEP 1. Subsequently, a position of the tool storage part 17, in which a fresh tool 16 is accommodated, of the tool magazine 13 is indexed (STEP 12) and a center position of the tool storage part 17 as indexed is moved to a fixed position, which agrees with a center position of the tool clamp 22 of the main spindle part 21 (STEP 13). Subsequently, the same operation as that in the case where a tool is discharged from the main spindle part 21 illustrated in Fig. 7, moves the tool magazine 13 toward the main spindle part 21 along the direct-acting shaft 12 (STEP 14) to push out the cylinder whereby the tool magazine 13 is fixed (STEP 15). An air flow pushes the tool storage part 17 to push the tool clamp 22 to release locking of the steel ball 44 (STEP 16). Here, an air is introduced into the piston 33 from the air flow passage to accommodate a collet 31 in the tool storage part 17 (STEP 17). Thereafter, an air flow in the tool storage part 17 is released whereby the tool clamp 22 is returned to its original position and the collet 31 is coupled with the main spindle part 21 by the steel ball 44 (STEP 18). Thereafter, the cylinder and the direct-acting shaft 12 are returned to their original positions to complete insertion of a tool (STEP 19 and STEP 20).

Subsequently, an explanation will be given to an operation of the machine tool according to the embodiment. First, the Y slider 27 is moved to make a center position of the tool clamp 22 of the main spindle part 21 agree with a center position of the tool storage parts 17 of the tool exchange unit 11. Subsequently, a predetermined tool 16 is mounted to the main spindle part 21 by the method illustrated in Fig. 7. Since the tool magazine 13 is in a position, in which it retreats from the main spindle part 21, as illustrated in STEP 10 in Fig. 7 in a state after the termination of mounting the tool 16 to the main spindle part 21, a sufficient interval is produced between the tool 16 mounted to the main spindle part 21 and the tool magazine 13 of the tool exchange unit 11 to interpose the work holder 81 therebetween.
Subsequently, when a work is mounted to the work holder 81, the Z table 82 and the X table 83 are moved to be arranged in opposition to the tool 16, and the motor 24 moves the Z table 82 and the X table 83 minutely while rotating the tool 16, a predetermined location of the work 86 can be processed. When a predetermined working of the work is terminated, the Z table 82 and the X table 83 are moved to separate the work from the tool 16 to stop the motor 24.
In the case where a different working from the working by a present tool 16 is to be made on the work, the tool 16 presently mounted to the main spindle part 21 is discharged by the method illustrated in Fig. 7 to be replaced by a fresh tool 16 by the method illustrated in Fig. 8. Thereafter, working of the work is made in the same manner.
Control of movements of the Z table 82, the X table 83, and the Y slider 27 is exercised by a personal computer whereby positioning resolution can be controlled in unit of 1 µm. The present machine tool is intended for micro working of various minute pars used in digital equipments such as portable telephone, DVD, notebook-sized personal computer, etc., so that a size for working is set to 10×10×10 mm or less. While in such working, miniaturization is desired in machine tools, the machine tool according to the embodiment enables miniaturization of 500 mm width, 320 mm depth, and 340 mm height.

### Industrial Applicability

The automatic tool exchange apparatus and the tool exchange method according to the invention are preferably applied to an automatic tool exchange apparatus for automatic exchange of a working tool in various machine tools such as lathe, micro-lathe, milling machine, micro-milling machine, etc.
Also, the machine tool according to the invention is suited to micro-working and can be made small in size, so that it is preferably applied to various micro-machine tools such as micro-lathe, micro-milling machine, etc.

## Claims

1. An automatic tool exchange apparatus (10) comprising a tool exchange unit (11) and a main spindle part (21),
wherein the tool exchange unit (11) comprises a tool magazine (13), which rotates about a rotating shaft (12) and includes a plurality of tool storage parts (17), means for moving the tool magazine (13) toward the rotating shaft (12), and
the main spindle part (21) comprises a motor (24), which rotates the tool (16), a tool clamp (22), which holds the tool (16) and a tool storage part (42),
**characterized in that**, the tool exchange unit (11) further comprises an air supply source, which supplies an air flow to move a tool (16) to the main spindle part (21), the main sprindle part (31) further comprises an air supply source, which supplies an air flow to move the tool (16) to the tool exchange unit (11), and
the tool (16) is press fitted into a collet (31) formed at an outer periphery thereof with a recess (32), into which a steel ball(44) can be fitted, and the collet (31) is accommodated in the tool storage part (42) of the main spindle part (21) with the steel ball (44) therebetween,
wherein the tool storage part (42) of the main spindle part (21) is formed with a space (46), which the steel ball(44) enters and leaves, and the steel ball (44) moves in the space (46) to release joining of the collet (31) and the tool storage part (42) of the main spindle part (21).

2. The automatic tool exchange apparatus according to claim 1, further comprising positioning means that makes a center position of the tool storage part and a center position of the shaft agree with each other.

3. A tool exchange method for an automatic tool exchange apparatus according to claim 1 or 2, in which the tool exchange unit (21) and the main spindle part (21) are opposingly arranged,
**characterized in that** the tool (16) is moved by an air flow between the tool magazine (13), which is provided on the tool exchange unit (11) to store a tool (16), and a tool clamp (22), which is provided on the main spindle part (21) to hold the tool (16), and thus the tool (16) is exchanged.

4. A machine tool comprising an automatic tool exchange apparatus (10) according to claim 1, further comprising a work holding unit,
wherein the work holding unit comprises a work holder (81) mounted on a table (82, 83), which is movable in two directions perpendicular to each other on a horizontal plane.

## Patentansprüche

1. Automatische Werkzeugwechselvorrichtung (10), die eine Werkzeugwechseleinheit (11) und einen Hauptspindelteil (21) aufweist, wobei die Werkzeugwechseleinheit (11) ein Werkzeugmagazin (13) aufweist, das sich um eine Drehwelle (12) dreht und das eine Vielzahl von Werkzeuglagerteilen (17) und Einrichtungen zum Bewegen des Werkzeugmagazins (13) in Richtung der Drehwelle (12) umfasst, und
wobei der Hauptspindelteil (21) einen Motor (24), der das Werkzeug (16) dreht, eine Werkzeugeinspannvorrichtung (22), die das Werkzeug (16) hält und einen Werkzeuglagerteil (42) aufweist,
**dadurch gekennzeichnet, dass** die Werkzeugwechseleinheit (11) ferner eine Luftzufuhrquelle aufweist, die einen Luftstrom zum Bewegen eines Werkzeugs (16) zu dem Hauptspindelteil (21) liefert, wobei der Hauptspindelteil (21) ferner eine Luftzufuhrquelle aufweist, die einen Luftstrom zum Bewegen des Werkzeugs (16) zu der Werkzeugwechseleinheit (11) aufweist, und
das Werkzeug (16) in ein Spannfutter (31) eingepasst ist, das an einem Außenumfang davon mit einer Vertiefung (32) ausgebildet ist, in die eine Stahlkugel (44) eingepasst werden kann, und das Spannfutter (31) mit der Stahlkugel (44) dazwischen in dem Werkzeuglagerteil (42) des Hauptspindelteils (21) untergebracht ist,
wobei der Werkzeuglagerteil (42) des Hauptspindelteils (21) mit einem Zwischenraum (46) ausgebildet ist, in den die Stahlkugel (44) eintritt und den sie verlässt, und die Stahlkugel (44) sich in dem Zwischenraum (46) bewegt, um die Verbindung des Spannfutters (31) und des Werkzeuglagerteils (42) des Hauptspindelteils (21) zu lösen.

2. Automatische Werkzeugwechselvorrichtung nach Anspruch 1, die ferner eine Positionierungseinrichtung aufweist, die eine Mittelposition des Werkzeuglagerteils und eine Mittelposition der Welle miteinander in Übereinstimmung bringt.

3. Werkzeugwechselverfahren für eine automatische
Werkzeugwechselvorrichtung nach Anspruch 1 oder 2, wobei die Werkzeugwechseleinheit (21) und der Hauptspindelteil (21) entgegengesetzt angeordnet sind,
**dadurch gekennzeichnet, dass** das Werkzeug (16) durch einen Luftstrom zwischen dem Werkzeugmagazin (13), das auf der Werkzeugwechseleinheit (11) bereitgestellt ist, um ein Werkzeug (16) zu lagern, und einer Werkzeugeinspannvorrichtung (22), die auf dem Hauptspindelteil (21) bereitgestellt ist, um das Werkzeug (16) zu halten, bewegt wird, und auf diese Weise das Werkzeug (16) gewechselt wird.

4. Maschinenwerkzeug, das eine automatische Werkzeugwechselvorrichtung (10) nach Anspruch 1 aufweist, das ferner eine Werkstückhalteeinheit aufweist, wobei die Werkstückhalteeinheit eine Werkstückhalterung (81) aufweist, die auf einen Tisch (82, 83) montiert ist, der auf einer horizontalen Ebene in zwei aufeinander senkrechte Richtungen beweglich ist.

## Revendications

1. Appareil automatique de changement d'outil (10) comprenant une unité de changement d'outil (11) et une pièce principale formant axe (21),
dans lequel l'unité de changement d'outil (11) comprend un magasin d'outils (13) qui tourne autour d'un axe de rotation (12) et inclut une pluralité de pièces de stockage d'outils (17), un moyen permettant de déplacer le magasin d'outils (13) vers l'axe de rotation (12), et
la pièce principale formant axe (21) comprend un moteur (24) qui fait tourner l'outil (16), un mécanisme de serrage d'outil (22) qui maintient l'outil (16) et une pièce de stockage d'outils (42),
**caractérisé en ce que** l'unité de changement d'outil (11) comprend en outre une source d'alimentation en air qui fournit un flux d'air afin de déplacer un outil (16) vers la pièce principale formant axe (21), la partie principale formant axe (21) comprend en outre une source d'alimentation en air qui fournit un flux d'air afin de déplacer d'outil (16) vers l'unité de changement d'outil (11), et
l'outil (16) est ajusté à force dans une pince de serrage (31) formée au niveau de la périphérie externe de celui-ci avec un retrait (32) dans lequel peut être ajustée une bille d'acier (44), et la pince de serrage (31) est logée dans la pièce de stockage d'outils (42) de la partie principale formant axe (21), la bille d'acier (44) se trouvant entre celles-ci,
dans lequel la pièce de stockage d'outils (42) de la pièce principale formant axe (21) est formée avec un espace (46) dans lequel la bille d'acier (44) entre et sort, et la bille d'acier (44) se déplace dans l'espace (46) afin de libérer la jonction de la pince de serrage (31) et de la pièce de stockage d'outils (42) de la partie principale formant axe (21).

2. Appareil automatique de changement d'outil selon la revendication 1, comprenant en outre un moyen de positionnement qui fait correspondre l'une avec l'autre la position centrale de la pièce de stockage d'outils et la position centrale de l'axe.

3. Procédé de changement d'outil pour un appareil automatique de changement d'outil conforme à la revendication 1 ou 2, dans lequel l'unité de changement d'outil (11) et la partie principale formant axe (21) sont agencées de manière à s'opposer,
**caractérisé en ce que** l'outil (16) est déplacé grâce à un flux derrière se trouvant entre le magasin d'outils (13) qui est prévu sur l'unité de changement d'outil (11) pour stocker un outil (16) et un mécanisme de serrage d'outil (22) qui est prévu sur la partie principale formant axe (21) afin de maintenir l'outil (16), ce qui provoque ainsi le changement de l'outil (16).

4. Machine-outil comprenant un appareil automatique de changement d'outil (10) conforme à la revendication 1, comprenant en outre une unité de maintien d'une pièce de fabrication,
dans lequel l'unité de maintien de pièce de fabrication comprend un dispositif de maintien de pièce de fabrication (81) monté sur une table (82, 83) qui est mobile dans deux directions perpendiculaires l'une à l'autre sur un plan horizontal.
